# NOUVEAU FASCICULE DE BREVET EUROPEEN

(11) **EP 1 234 753 B2**
(45) Date de publication et mention de la décision concernant l'opposition: **24.03.2010**
(45) Mention de la délivrance du brevet: 11.08.2004
(21) Numéro de dépôt: 02290470.0
(22) Date de dépôt: 26.02.2002
(51) Int. Cl.: B62D 29/04, B60Q 1/30

(54) **Vitre de custode avec signalisation**
Hintere Seitenscheibe mit Signalleuchte
Rear side window with signaling device

(30) Priorité: 26.02.2001 FR 0102594
(43) Date de publication de la demande: 28.08.2002
(73) Titulaire: COMPAGNIE PLASTIC OMNIUM, 69007 Lyon (FR)
(72) Inventeur: Pommeret, Maelig, 01100 Oyonnax (FR); Thevenet, Charlotte, 01580 Izernore (FR); Delavalle, Dominique, 01100 Marchon (FR)
(74) Mandataire: Potdevin, Emmanuel Eric

(56) Documents cités:
- EP-A- 0 403 334
- EP-A1- 0 857 600
- EP-A1- 1 190 831
- DE-A- 2 948 524
- DE-A- 19 706 043
- DE-A- 19 707 614
- DE-A- 19 951 785
- DE-U- 29 719 104
- 'Die Brillianz der Kfz-Kunststoffscheiben' PLASTVERARBEITER vol. 51, no. 2, pages 36 - 39
- L'AUTO-JOURNAL no. 547, 27 Juillet 2000, pages 63, 71 - 72

## Description

La présente invention concerne une pièce de carrosserie de custode.

Dans les automobiles conventionnelles, le toit du véhicule se raccorde au reste de la carrosserie par deux montants avant qui bordent le pare-brise et deux montants arrière qui se situent généralement dans le prolongement des bords arrière des portières arrière, ou des portières avant si le véhicule ne possède pas de portières arrière.

Ces deux montants arrière ne coïncident pas toujours avec les coins arrière du véhicule, auquel cas il existe, entre chaque montant arrière et le coin arrière correspondant, une surface pleine ou vide, généralement non structurelle, appelée custode.

La custode peut être habillée d'une pièce de carrosserie opaque en matière plastique ou en tôle peinte. Elle peut également comporter une vitre. On parle alors de vitre de custode.

Cette partie du véhicule n'est généralement pas utilisée pour y loger des organes fonctionnels comme, par exemple, des optiques, en raison notamment des difficultés d'accostage que cela engendre.

En effet, la juxtaposition d'une vitre de custode avec une optique suppose une mise en référence parfaite, c'est-à-dire des jeux d'assemblage extrêmement réduits ainsi que des tolérances de fabrication très faibles, ce qui rend de telles réalisations économiquement inacceptables.

De plus, la nécessité d'assurer une parfaite étanchéité de l'habitacle, d'une part, et du boîtier d'optique, d'autre part, imposerait d'utiliser des joints et des moyens de montage ou d'assemblage relativement coûteux.

Au mieux, les custodes ne sont donc utilisées que comme fenêtre supplémentaire, permettant d'accroître la visibilité du conducteur et des passagers et d'améliorer l'éclairage naturel de l'habitacle.

On connaît de la publication "Die Brilllanz der Kfz-Kunststoffscheiben" issue de "Plastverarbeiter, 51. Jahrg. (2000) Nr 2" une pièce de carrosserie selon le préambule de la revendication 1.

La présente invention vise à fournir une solution aux problèmes suscités pour utiliser les surfaces de custode à des fins fonctionnelles.

La présente invention a pour objet une pièce de carrosserie de custode, réalisée d'un seul tenant et comprenant au moins une partie en matière transparente ou translucide formant une vitre de custode, et une autre partie contiguë à la vitre de custode et formant un vitrage de feux apte à protéger une source lumineuse positionnée sur le véhicule au voisinage de la vitre de custode.

La pièce de carrosserie comporte également, outre sa partie formant vitre de custode et sa partie formant vitrage de feux, une troisième partie contiguë à la vitre de custode, de même aspect que le reste de la carrosserie du véhicule. Cette partie sera désignée dans la suite de la description : partie carrosserie.

Généralement, la partie carrosserie est colorée "ton caisse".

Selon un premier mode de réalisation de l'invention, la pièce de carrosserie est réalisée en une seule matière transparente ou translucide apte à constituer la vitre de custode et la partie formant vitrage de feux, ainsi qu'éventuellement la partie carrosserie, après avoir subi un traitement visant à modifier son aspect extérieur.

Un tel traitement peut être un surmoulage de film, une peinture ou une sérigraphie.

Ces traitements ne sont pas exclusifs les uns des autres. En particulier, le traitement par sérigraphie peut permettre de modifier l'état de surface de la pièce de carrosserie pour faciliter la tenue d'une peinture.

Dans le cas d'une pièce partiellement peinte, l'invention présente l'avantage que la peinture peut être appliquée sur la face intérieure de la pièce de carrosserie, la peinture étant ainsi parfaitement protégée des agressions mécaniques extérieures.

De même, la partie de la pièce de carrosserie formant vitrage de feux peut être recouverte d'un vernis coloré ou d'un film surmoulé assurant la coloration locale de la partie formant vitrage et ce vernis ou ce film surmoulé peuvent être placés sur la face intérieure, située côté habitacle, de la pièce de carrosserie.

On comprend que l'invention permet aisément de résoudre les problèmes de la mise en référence des différentes pièces réunies dans l'espace de custode.

Dans un mode de réalisation particulier de l'invention, la pièce est réalisée en PMMA (polyméthamétacrylate).

Dans un mode de réalisation particulier de l'invention, une garniture est associée à la pièce de carrosserie pour s'intercaler entre le véhicule et la pièce de carrosserie et servir de support à cette dernière, tout en constituant un boîtier optique.

Cette garniture assure à la fois une fonction structurelle, garantissant la tenue de la pièce de carrosserie et son bon positionnement sur le véhicule, et une fonction organique au sens où elle forme, avec la pièce de carrosserie, un organe d'éclairage ou de signalisation.

Dans un mode de réalisation particulier de l'invention, la partie de la pièce de carrosserie constituant la vitre de custode est elle-même divisée en une partie fixe conventionnelle et une partie spécifique formant une vitre ouvrante, ou bien une trappe à carburant ou encore comportant des ouïes d'aération.

Afin de faciliter la compréhension de l'invention, on va en décrire maintenant des modes de réalisation donnés à titre d'exemples non limitatifs de la portée de l'invention, à l'aide des dessins annexés dans lesquels :
- la figure 1 est une vue en perspective éclatée de trois quarts arrière de la partie supérieure d'un véhicule automobile,
- la figure 2 est une section selon II-II d'une partie d'une garniture de la figure 1,
- la figure 3 est une vue analogue à la figure 1, les éléments étant assemblés,
- la figure 4 représente une pièce de carrosserie de custode,
- la figure 5 représente une autre pièce de carrosserie de custode,
- la figure 6 représente une troisième pièce de carrosserie de custode,
- la figure 7 représente une pièce de carrosserie selon un mode de réalisation de l'invention assemblée sur la partie arrière du véhicule automobile, et
- la figure 8 représente en perspective une coupe de la pièce de carrosserie de la figure 7 selon l'axe A-A.

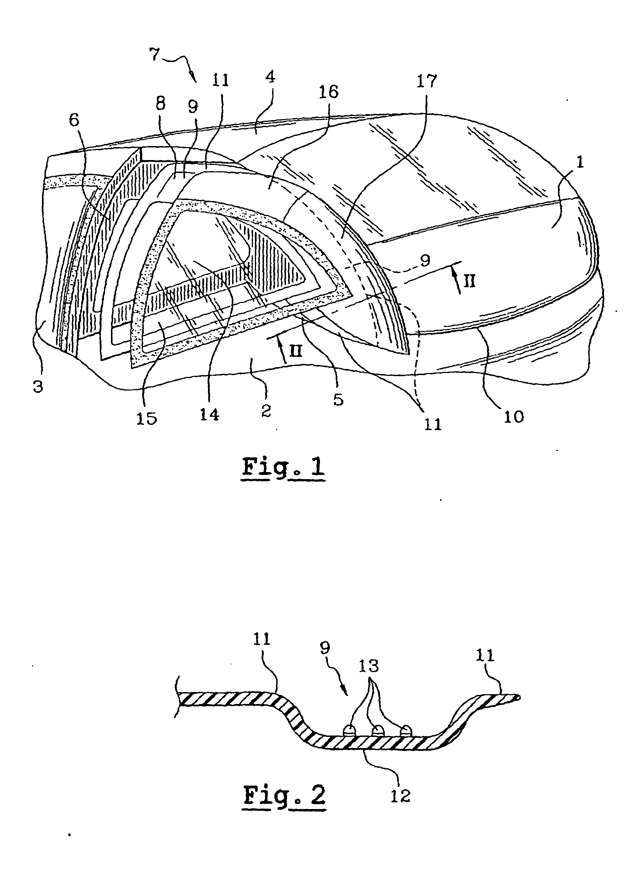

La figure 1 permet de voir un hayon arrière 1, une aile arrière 2, une portière arrière 3 et un toit 4 d'un véhicule automobile. L'angle supérieur arrière 5 de l'aile est tronqué pour des raisons esthétiques.

Le toit 4 est relié à l'aide par un montant vertical 6 qui borde la portière 3 et se situe en avant du coin arrière 7 du véhicule. Entre ce montant vertical 6 et le coin arrière 7, le toit 4 et l'aile 2 délimitent une surface correspondant à la custode. Dans l'exemple représenté, cette custode est sensiblement triangulaire.

Une première pièce 8, désignée garniture, conformée suivant les contours de la custode, est prévue pour être fixée sur le montant vertical 6, sur le bord du toit 4, sur l'encadrement du hayon 1 et sur le bord supérieur de l'aile 2 à l'aide de tout moyen de fixation assurant simultanément l'étanchéité de la liaison garniture/véhicule. Il peut s'agir d'un collage continu ou d'une fixation ponctuelle associée à un joint d'étanchéité.

En bordure du montant vertical 6 et de l'aile 2, la garniture ne forme qu'un cadre.

En revanche, du côté du toit 4 et du hayon 1, elle comporte un bord élargi 9 qui se prolonge plus bas que le bord supérieur de l'aile 2 et forme une excroissance occupant l'angle tronqué 5 de l'aile. Cette configuration particulière n'a pour but que de prolonger une ligne de style 10 qui s'étend transversalement au hayon 1.

Le bord élargi 9 de la garniture est délimité par des rebords 11, dont la face externe est de niveau avec le reste de la garniture, et comporte un fond 12 situé en retrait et constituant avec lesdits rebords, un boîtier ouvert vers l'extérieur du véhicule. Ce boîtier est muni de douilles pour des sources lumineuses telles que des diodes électroluminescentes 13 dans sa partie s'étendant entre le bord supérieur de la vitre du hayon 1 et la ligne de style 10.

Du fait de la présence de ce boîtier optique, la garniture 8 peut être considérée comme une pièce fonctionnelle.

Une pièce de carrosserie 14 de même contour que la garniture 8 et réalisée en matière plastique transparente, par exemple en PMMA, vient s'appliquer sur la garniture. Sa fixation est assurée par exemple par collage et par tout autre moyen de fixation étanche approprié.

La pièce de carrosserie 14 présente :
- une surface transparente 15, constituant une vitre de custode, au droit de l'ouverture délimitée par les bords de la garniture,
- une partie carrosserie 16 colorée "ton caisse", c'est-à-dire peinte comme le reste de la carrosserie, au droit de la portion du bord élargi de la garniture voisine du toit, et
- une partie vitrage de feux 17 colorée en rouge, au droit de la portion du bord élargi de la garniture munie de douilles.

Chacune des parties de la pièce de carrosserie est délimitée par une bande noire de finition.

En outre, la partie vitre de custode 15 est bordée par une sérigraphie qui dissimule le bord de la garniture.

En tant que support de la pièce de carrosserie 14, la garniture 8 peut être considérée comme une pièce structurelle.

L'optique intégrée à la custode grâce au boîtier 9 et à la partie de vitrage de feux 17 peut notamment servir de feux de signalisation, de feux de stop, d'indicateurs directionnels.

Il est intéressant de noter que le vitrage de l'optique est constitué par la même pièce que la vitre de custode, de sorte qu'aucun problème d'étanchéité ne peut se poser entre ces deux pièces. De plus, la finition esthétique est grandement améliorée du fait de la suppression des jeux d'accostage et des jeux de dilatation entre boîtier optique et vitre de custode. Le même avantage est obtenu entre la partie caisse et les deux autres parties de la custode.

En dehors de la fonction de signalisation optique, d'autres fonctions peuvent être intégrées à la custode.

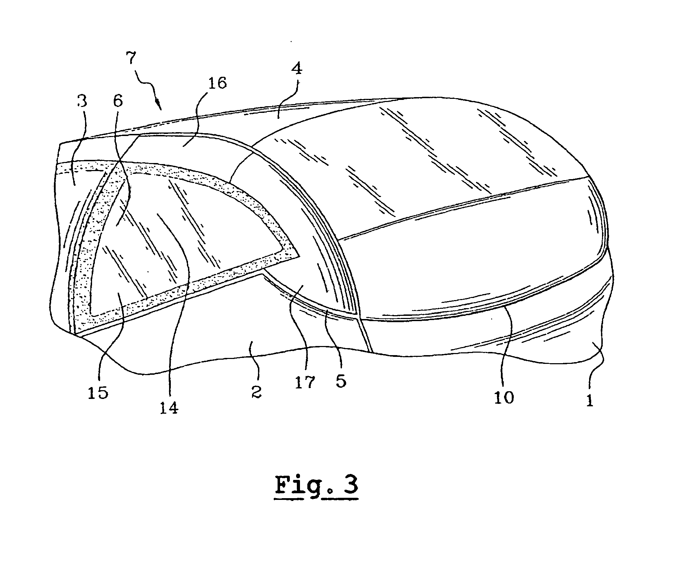

Les figures 3, 4 et 5 en fournissent quelques exemples, dans lesquels la partie vitre de custode 15', 15", 15''' de la pièce de carrosserie est divisée en deux dans le prolongement de la séparation entre la partie carrosserie et la partie vitrage de feux.

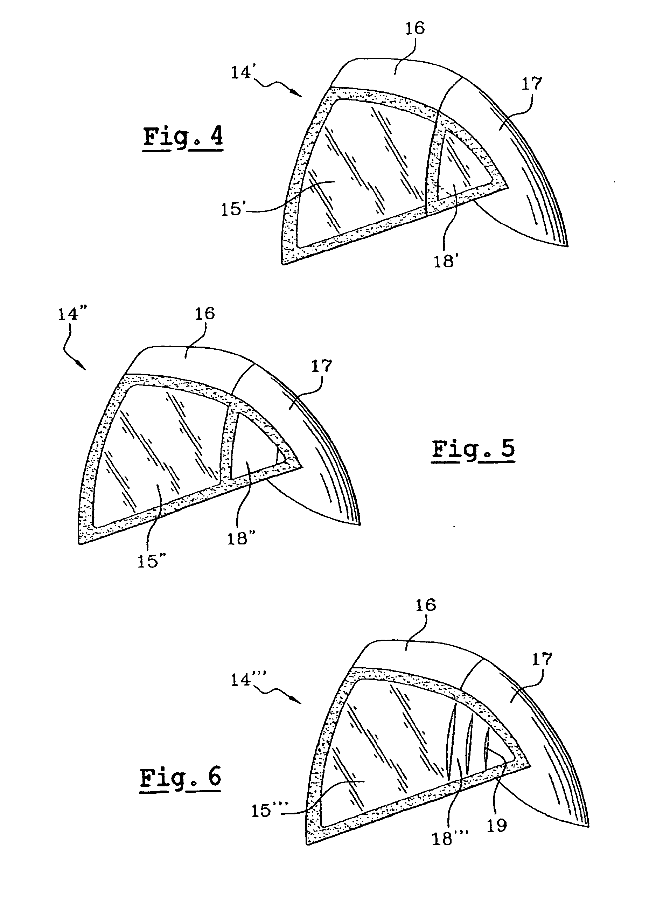

A la figure 4, la petite sous-partie 18' de la partie vitre de custode forme une vitre ouvrante.

A la figure 5, la petite sous-partie 18" de la partie de la vitre de custode forme une trappe à carburant.

A la figure 6, la petite sous-partie 18''' comporte des ouïes d'aération 19.

Dans ce dernier exemple, les ouïes d'aération permettent une circulation d'air entre l'habitacle du véhicule et l'extérieur. Il faut toutefois noter que cette circulation d'air ne concerne pas le boîtier d'optique qui demeure isolé, tant de l'extérieur que de l'intérieur, de manière étanche.

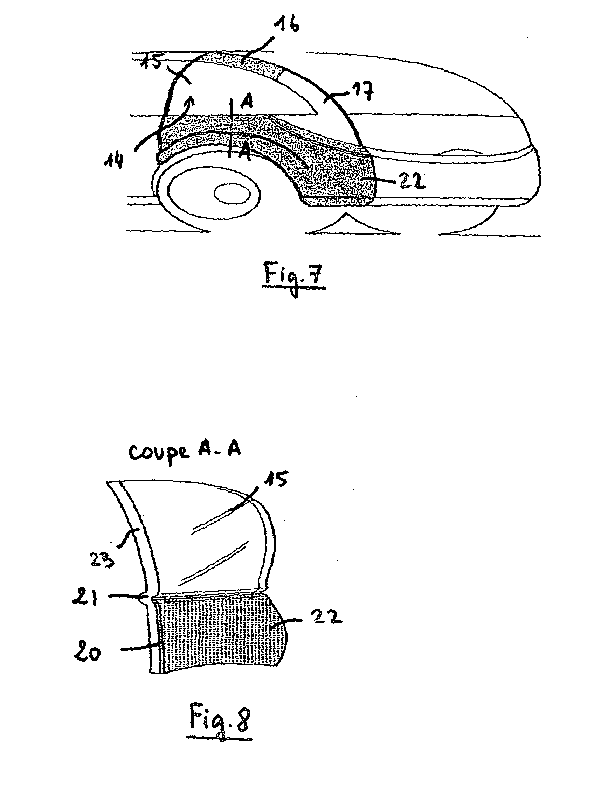

Dans le mode de réalisation représenté à la figure 7 et couvert par l'invention, la pièce de carrosserie 14 comprend non seulement la vitre de custode 15, la partie carrosserie 16 et la partie vitrage de feux 17, mais encore une seconde partie carrosserie 22 colorée "ton caisse" contiguë à la vitre de custode, et plus précisément située dans le prolongement inférieur de la vitre de custode 15 et de la partie vitrage de feux 17, pour former une partie de l'aile 2 du véhicule automobile. Cette seconde partie carrosserie 22 descend jusqu'au passage de roue.

La figure 8 représente en coupe selon l'axe A-A de la figure 7, un détail de la pièce de carrosserie 14 comportant la vitre de custode 15 et la seconde partie carrosserie 22.

Comme on le voit sur cette coupe, la pièce de carrosserie 14 est réalisée en une seule matière 23 transparente ou translucide. La seconde partie carrosserie 22 subit un traitement visant à modifier son aspect extérieur, qui, comme pour la partie carrosserie 16 peut être réalisé par un film opaque surmoulé 20, une peinture ou une sérigraphie.

De plus, une gorge 21 de séparation de finitions est formée sur la surface extérieure de la pièce de carrosserie 14 pour délimiter la vitre de custode 15 de la seconde partie carrosserie 22.

Il convient également de noter que l'invention procure une sensible diminution du temps de montage sur la chaîne principale du fait que la custode peut être préparée en dehors de la chaîne principale et rapportée sur le véhicule en une seule opération.

Un autre avantage procuré par l'invention consiste en la possibilité, d'un véhicule à l'autre, de monter différentes custodes en fonction des options ou du niveau d'équipement choisi.

Enfin, l'invention permet de réduire le nombre de composants nécessaires à la mise en place des fonctions remplies, ce qui constitue une économie en termes de prix de revient.

Les exemples décrits ci-dessus ne sauraient être interprétés comme constituant des limitations à la portée de l'invention, laquelle n'est définie que par les revendications annexées.

## Revendications

1. Pièce de carrosserie de custode (14), réalisée d'un seul tenant et comprenant au moins une partie en matière transparente ou translucide formant une vitre de custode (15), et une autre partie (17) contiguë à la vitre de custode (15) et formant un vitrage de feux apte à protéger une source lumineuse positionnée sur le véhicule au voisinage de la vitre de custode, **caractérisée en ce qu'**elle comprend, outre sa partie formant vitre de custode (15) et sa partie formant vitrage de feux (17), une troisième partie (16, 22) désignée "partie carrosserie", contiguë à la vitre de custode, de même aspect que le reste de la carrosserie du véhicule et **en ce qu'**elle forme une partie d'une aile de véhicule.

2. Pièce de carrosserie de custode (14) selon la revendication 1, **caractérisée en ce qu'**elle est réalisée en une seule matière (23) transparente ou translucide apte à constituer la vitre de custode (15) et la partie formant vitrage de feux, ainsi qu'éventuellement la partie carrosserie (16, 22), après avoir subi un traitement visant à modifier son aspect extérieur.

3. Pièce de carrosserie de custode (14) selon la revendication 2, **caractérisée en ce que** le traitement est un surmoulage de film (20), une peinture ou une sérigraphie.

4. Pièce de carrosserie de custode (14) selon la revendication 3, **caractérisée en ce que** la partie carrosserie (16, 22) est peinte sur la face intérieure de la pièce de carrosserie.

5. Pièce de carrosserie de custode (14) selon la revendication 3, **caractérisée en ce que** la partie formant vitrage de feux (17) est recouverte d'un vernis coloré ou d'un film surmoulé placé sur la face intérieure de la pièce de carrosserie.

6. Pièce de carrosserie de custode (14) selon l'une quelconque des revendications 1 à 5, **caractérisée en ce qu'**elle est réalisée en PMMA (polyméthamétacrylate).

7. Pièce de carrosserie de custode (14) selon l'une quelconque des revendications 1 à 6, **caractérisée en ce qu'**une garniture (8) est associée à la pièce de carrosserie (14) pour s'intercaler entre le véhicule et la pièce de carrosserie et servir de support à cette dernière, tout en constituant un boîtier optique.

8. Pièce de carrosserie de custode selon l'une quelconque des revendications 1 à 7, **caractérisée en ce que** la partie de la pièce de carrosserie constituant la vitre de custode (15) est elle-même divisée en une partie fixe et une partie spécifique (18', 18", 18''') formant une vitre ouvrante (18'), une trappe à carburant (18") ou comportant des ouïes d'aération (19).

## Patentansprüche

1. Karosserieteil für kleines hinteres Seitenfenster (14), das aus einem Stück hergestellt ist und mindestens ein Teil aus durchsichtigem oder durchscheinendem Kunststoff enthält, das eine Seitenfensterscheibe (15) bildet, **dadurch gekennzeichnet, dass** es einen weiteren Teil (17) neben der Seitenfensterscheibe (15) umfasst, und der eine Leuchtenverglasung bildet, die eine Lichtquelle schützen kann, die auf dem Fahrzeug in der Nähe der Seitenfensterscheibe positioniert ist.

2. Karosserieteil für kleines hinteres Seitenfenster (14) nach Anspruch 1, **dadurch gekennzeichnet, dass** es neben seinem Teil, das die Seitenfensterscheibe (15) bildet, und seinem Teil, das die Lichtverglasung (17) bildet, ein drittes Teil (16, 22) mit dem gleichen Aussehen wie der Rest der Fahrzeugkarosserie, "Karosserieteil" genannt, neben dem kleinen hinteren Seitenfenster umfasst.

3. Karosserieteil für kleines hinteres Seitenfenster (14) nach einem der Ansprüche 1 und 2, **dadurch gekennzeichnet, dass** es aus einem einzigen durchsichtigen oder durchscheinenden Werkstoff (23) besteht, der die Seitenfensterscheibe (15) und das Teil, das die Leuchtenverglasung formt, bilden kann, sowie eventuell das Karosserieteil (16, 22), nachdem es eine Behandlung erhalten hat, die darauf abzielt, sein äußeres Aussehen zu ändern.

4. Karosserieteil für kleines hinteres Seitenfenster (14) nach Anspruch 3, **dadurch gekennzeichnet, dass** die Behandlung eine geformte Folie (20), ein Anstrich oder eine Serigraphie ist.

5. Karosserieteil für kleines hinteres Seitenfenster (14) nach Anspruch 4, **dadurch gekennzeichnet, dass** das Karosserieteil (16, 22) auf der Innenseite des Karosserieteils gestrichen ist.

6. Karosserieteil für kleines hinteres Seitenfenster (14) nach Anspruch 4, **dadurch gekennzeichnet, dass** das die Leuchtenverglasung (17) bildende Teil mit einem farbigen Lack oder einer geformten Folie bedeckt ist, der/die auf der Innenseite des Karosserieteils platziert ist.

7. Karosserieteil für kleines hinteres Seitenfenster (14) nach einem der Ansprüche 1 bis 6, **dadurch gekennzeichnet, dass** es aus PMMA (Polymethametacrylat) hergestellt ist.

8. Karosserieteil für kleines hinteres Seitenfenster (14) nach einem der Ansprüche 1 bis 7, **dadurch gekennzeichnet, dass** ein Futter (8) mit dem Karosserieteil (14) verbunden ist, um sich zwischen das Fahrzeug und das Karosserieteil zu fügen und als Träger für Letzteres zu dienen und gleichzeitig ein Optikgehäuse zu bilden.

9. Karosserieteil für kleines hinteres Seitenfenster (14) nach einem der Ansprüche 1 bis 8, **dadurch gekennzeichnet, dass** der Teil des Karosserieteils, der die Seitenfensterscheibe (15) bildet, selbst in einen stationären und einen spezifischen Teil (18', 18", 18"') , der eine öffnende Scheibe (18'), eine Tankklappe (18") bildet oder Belüftungsschlitze (19) enthält, unterteilt ist.

## Claims

1. A rear quarter piece of bodywork (14) made as a single piece and comprising at least a portion of transparent or translucent material forming a quarter window (15), the piece being **characterized in that** it includes another portion (17) contiguous with the quarter window (15) and forming glazing for lights suitable for protecting a light source positioned on the vehicle in the vicinity of the quarter window.

2. A rear quarter piece of bodywork (14) according to claim 1, **characterized in that** in addition to its portion forming a quarter window (15) and its portion (17) forming glazing for lights, it also includes a third portion (16, 22) constituting a bodywork portion contiguous with the quarter window and having the same appearance as the remainder of the bodywork of the vehicle.

3. A rear quarter piece of bodywork (14) according to claim 1 or claim 2, **characterized in that** it is made of a single transparent or translucent material (23) suitable for constituting the quarter window (15) and the portion forming glazing for lights, and possibly also the bodywork portion (16, 22) after being subjected to treatment seeking to modify its external appearance.

4. A piece of rear quarter bodywork (14) according to claim 3, **characterized in that** the treatment is overmolding film (20), painting, or silkscreen printing.

5. A piece of rear quarter bodywork (14) according to claim 4, **characterized in that** the bodywork portion (16, 22) is painted on the inside face of the piece of bodywork.

6. A piece of rear quarter bodywork (14) according to claim 4, **characterized in that** the portion (17) forming glazing for lights is covered in a colored varnish or in an overmolded film placed on the inside face of the piece of bodywork.

7. A piece of rear quarter bodywork (14) according to any one of claims 1 to 6, **characterized in that** it is made of polymethylmethacrylate (PMMA).

8. A piece of rear quarter bodywork (14) according to any one of claims 1 to 7, **characterized in that** trimming (8) is associated with the piece of bodywork (14) to be interposed between the vehicle and the piece of bodywork and to serve as a support for the piece of bodywork, while simultaneously constituting a light unit housing.

9. A piece of rear quarter bodywork according to any one of claims 1 to 8, **characterized in that** the portion of the piece of bodywork that constitutes the quarter window (15) is itself subdivided into a fixed portion and a special portion (18', 18", 18" ') forming an opening window (18'), a fuel tank filler hatch (18"), or having ventilation slots (19).
